# EUROPEAN PATENT SPECIFICATION

(11) **EP 0 776 157 B1**
(45) Date of publication and mention of the grant of the patent: **14.06.2000**
(21) Application number: 94922611.2
(22) Date of filing: 18.07.1994
(51) Int. Cl.: A01K 15/02

(54) **DOG CHEW TOY FOR CANINE DENTAL CARE AND METHODS FOR MAKING CHEW TOY**
HUNDEKAUSPIEL ZUR ZAHNPFLEGE UND VERFAHREN ZU DESSEN HERSTELLUNG
JOUET A MASTIQUER DESTINE AUX SOINS DENTAIRES DU CHIEN ET SON PROCEDE DE FABRICATION

(43) Date of publication of application: 04.06.1997
(73) Proprietor: Aspen Pet Products, Inc., Denver, Colorado 80239-2005 (US)
(72) Inventor: O'ROURKE, Anthony, Malibu, CA 90265 (US)
(74) Representative: O'Connell, David Christopher
(86) International application number: US9408082
(87) International publication number: WO9602130

(56) References cited:
- US-A- 1 149 170
- US-A- 4 033 365
- US-A- 4 034 771
- US-A- 4 414 990
- US-A- 4 924 811
- US-A- 4 986 288
- US-A- 5 033 410
- US-A- 5 126 137
- US-A- 5 215 038
- US-A- 5 329 881
- US-A- 5 467 741

## Description

### Background of the Invention

The present invention relates to a novel chew toy for dogs for improving canine teeth care. In recent years, veterinarians have become increasingly aware of the need for improved canine dental care. Many veterinarians are recommending the regular brushing of a dog's teeth to prevent decay and gum disease. Such a practice, however, is distasteful to many pet owners and not generally enjoyed by dogs. As a result, such recommendations have been largely ignored and a dog's teeth are generally ignored by its owner until a problem arises.

A popular chew toy for dogs previously developed by applicant comprises a short length of cotton rope having large knots formed near the ends thereof so as to resemble a classic dog bone configuration. The soft cotton rope provides a cleaning and flossing of the dog's teeth and a gentle massaging of the dog's gums when chewed and thus provides therapeutic dental benefits as well as playful enjoyment for the dog. While providing an excellent means for cleaning the dog's teeth and promoting healthful gums, such devices do not provide a complete solution to the problem of canine tooth care. Just as fluoride is now universally recognized as a necessary element of human dental care, it would also be highly beneficial for canine dental care. Unfortunately, there does not currently exist an acceptable means for applying fluoride to a dog's teeth. Based on past experiences, brushing a dog's teeth with a cleaning agent containing fluoride would not present an acceptable method to pet owners. Regular fluoride applications by a veterinarian would be too expensive for most pet owners. The present invention overcomes these problems by providing a vehicle for the fluoride which requires no effort on the part of the dog owner, is inexpensive and highly attractive to dogs.

In addition to fluoride, a complete dental care program includes tartar and plaque control. A build-up of tartar or plaque between the teeth and gums can cause the gums to separate from the teeth and lead to tooth decay and gum disease. The chew toy of the present invention also provides a vehicle for agents known to inhibit the build-up of tartar and plaque on teeth and thereby provides dog owners with an inexpensive and very convenient means for maintaining their pets' teeth and gums in a healthy condition.

A somewhat related problem to tooth and gum care of which pet owners are acutely aware is canine halitosis. The chew toy of the present invention not only inhibits the growth of bacteria which cause the problem, but can also serve as an effective vehicle for a breath freshener. One previously considered solution can be found in US Patent No. 1,149,170.

### Summary of the invention

According to one aspect of the present invention, there is provided a chew toy for dogs comprising a length of rope formed from a plurality of soft pliable threads, the threads being impregnated with a therapeutic agent so as to dispose said agent through said rope whereby upon being chewed by a dog a substantial portion of said agent is retained within said rope and a lesser portion of said agent is released onto the teeth of the dog, characterised in that said agent is encapsulated in porous polymeric beads and said beads are ionically bonded to said threads, and in that said therapeutic agent is a therapeutic dental agent.

According to another aspect of the present invention, there is provided a process for forming a chew toy having a therapeutic agent impregnated therein, said process comprising the steps of:
impregnating a plurality of threads with a therapeutic agent;
forming said threads into a length of rope; and
forming said rope into a desired chew toy configuration; characterised in that said agent is a therapeutic dental agent, and in that during the impregnating step, a static charge is imparted to the threads, and particles of the agent are applied to the threads such that those particles are ionically bonded to the threads.

The soft cotton threads comprising the rope toy provide a cleaning and flossing of the dog's teeth and a gentle massaging of its gums when chewed or otherwise used by the dog as an interactive toy for playful tugging with humans. The therapeutic agents which are applied to and carried by the cotton thread interact with the dog's teeth and saliva to affect their intended purpose. By adhering the therapeutic agents to the individual cotton threads prior to twisting the threads into the rope configuration, the agents are dispersed uniformly throughout the formed chew toy and contained therein such that they can be continually released to the dog's teeth with repeated usage and not readily exhausted so as to prolong the useful therapeutic life of the toy.

In forming the chew toy of the invention, the therapeutic agents are applied to the cotton threads in polymeric beads which will later release the fluoride under the friction of the dog's teeth.

Through such a process as described above, the resultant saturation of the cotton rope with fluoride and/or other therapeutic agents provides an excellent vehicle for the agents to the dog's teeth and the gradual release thereof as the agents combine with the saliva on the teeth as the dog chews and/or tugs on the toy.

Fluoride also can be applied to the individual cotton threads in an aqueous solution comprising fluoride and polyvinyl alcohol wherein the fluoride comprises about six percent by weight of the solution and the alcohol about one half percent by weight. The solution can either be sprayed onto the individual threads in the spray chamber, or the threads can be passed through a bath of the solution. The threads are then passed through a drying station, gathered and twisted into a length of rope from which the toy is formed as above-described. Other therapeutic agents in addition to or in lieu of fluoride can be employed in such a solution and imparted to the threads in this manner.

In an embodiment of the invention, fluoride powder and/or other therapeutic agents are encapsulated in porous polymeric beads of the type disclosed in U.S. Patent No. 4,690,825. The polymer beads encapsulate the fluoride and/or other agents and, upon friction with the dog's teeth, release the agents onto the teeth. The polymeric beads can be applied to the individual cotton threads either by spraying the beads onto the moistened cotton threads such that they are held within the pores of the cotton fibers upon drying, or the agent-carrying beads can be created with a strong negative ionic charge such that they will adhere to the cotton threads by ionic bonding.

It is therefore the principal object of the present invention to provide a chew toy for dogs for improving canine teeth care.

It is another object of the present invention to provide an improved means for regularly applying fluoride to a dog's teeth.

It is yet another object of the present invention to provide a chew toy for dogs impregnated with one or more selected therapeutic additives for canine tooth care.

It is a further object of the present invention to provide a chew toy for dogs which provides a gentle cleaning and flossing of the dog's teeth, a gentle message of its gums and which releases fluoride to the dog's teeth as the toy is chewed and/or tugged by the dog.

It is still a further object of the present invention to provide a means for impregnating a cotton chew toy with at least one therapeutic agent for canine tooth care.

It is yet another object of the present invention to provide a means for impregnating a cotton chew toy for dogs with a breath freshening agent and/or an attractive flavoring agent.

These and other objects and advantages of the present invention will become readily apparent from the following description taken in conjunction with the accompanying drawings.

### Description of the Preferred Embodiment

### In the Drawings

Figure 1 is a perspective view of the dog chew toy of the present invention.
Figure 2 is a schematic representation of a process for applying the fluoride and/or other agents onto the threads in forming the chew toy of the present invention.
Figure 3 is a sectional side view of the fluoride spray chamber.
Figure 4 is a perspective view of a drying station employed in the process of forming the chew toy of the present invention.

Referring now in detail to the drawings, the dog chew toy 10 of the present invention is comprised of a length of rope 12 formed of three strands or skeins 13 of twisted cotton threads 14 uniformly impregnated with one or more particulate dental care agents 16, such as fluoride, and formed into a desired chew toy configuration. While fluoride is the preferred dental care agent carried by chew toy 10, the threads 14 of toy 10 can be impregnated with other therapeutic agents in lieu of or in addition to fluoride. Breath freshening and flavoring agents can also be used. The configuration of the toy 10 and the basic methods for applying the agent or agents to the threads thereof do not depend on the particular agent or agents being used. Accordingly, the following description of the chew toy and methods for producing the toy will generally refer solely to fluoride as the additive agent.

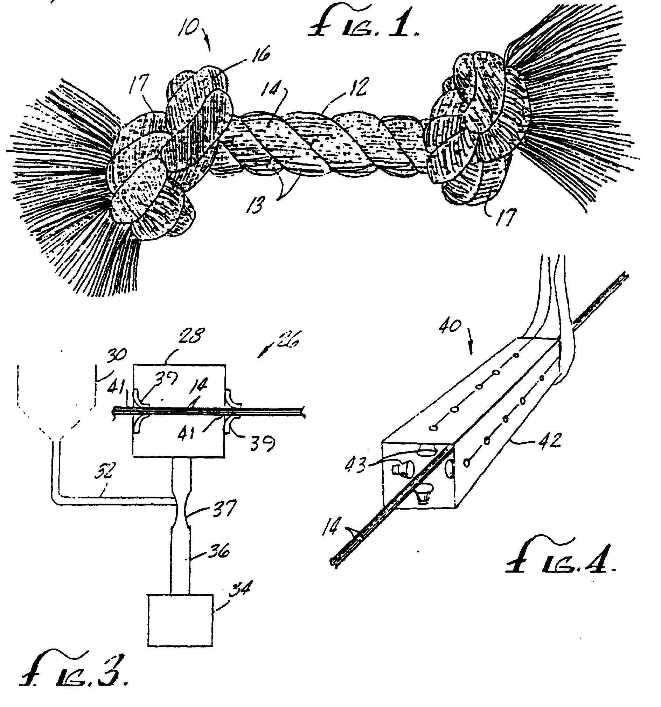

In the preferred configuration of chew toy 10 illustrated in Figure 1, the cotton rope 12 is relative short in length and provided with large knots 17 tied proximate its extended ends so as to resemble a classic dog bone. While such a configuration has proved popular with dogs, a wide variety of different chew and tug toy configurations could be employed with the present invention. It is to be understood that while the threads of which rope 12 is formed are preferably one hundred percent natural cotton, threads comprised of a blend of cotton and other natural or synthetic fibers, such as polyester, could be used. If blended threads are employed, the threads should be at least seventy and more preferably ninety-five percent cotton. Unless otherwise stated, the term "cotton" as used herein is intended to include such cotton blends.

In the formation of toy 10, a conventional rope-forming process is preferably employed wherein the fluoride 16 is applied to the cotton threads 14 prior to twisting the threads into the skeins 13 from the which the rope 12 is formed so as to disperse the fluoride throughout the chew toy 10 and thereby better contain the fluoride. Such a distribution and containment of the fluoride provides for a gradual release thereof as the fluoride combines with the saliva on the teeth of the dog and thereby prolongs the full therapeutic benefits of the toy 10.

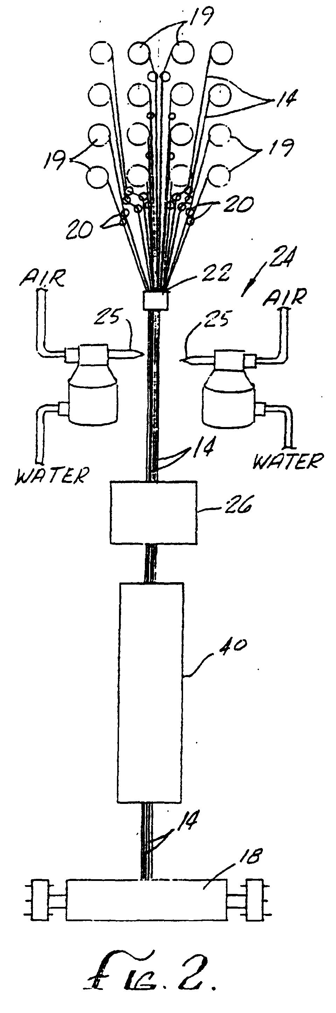

To form one example of a chew toy 10, a plurality of cotton threads 14 are individually drawn by a conventional ball warper 18 from their conventional carrying spools 19 over a plurality of following guides 20 to a collecting and spacing guide 22, as illustrated in Figure 2. Guide 22 collects the individual threads 14 and guides the threads in a slightly spaced array to a misting station 24 where a mist of water is sprayed through one or more nozzles 25 onto the moving threads. The moisture causes the cotton fibers to expand, opening the fiber pores. The moistened threads are then directed to a fluoride spray station 26 where fluoride powder is sprayed onto the moistened threads 14. By maintaining a slight separation of the cotton threads 14 within spray station 26, the fluoride particles can be deposited onto the individual threads and thus be relatively evenly dispersed throughout the subsequently formed cotton skeins from which cotton rope 12 is formed.

A spray station 24 is illustrated in Figure 3. As seen therein, the fluoride spray station 26 includes a chamber 28 through which the threads 14 pass. A hopper 30 is provided for holding a supply of fluoride powder, which communicates with chamber 28 by means of conduit 32. A blower 34 is disposed below chamber 28 and communicates therewith via conduit 36. Conduit 36 also communicates with conduit 32 and defines a venturi nozzle 37 therein for drawing fluoride powder from hopper 30 through conduit 32 into conduit 36, where it is carried into chamber 28 by the air flow from the blower. The venturi nozzle 38 is preferably provided with a variable orifice for adjusting the air flow there through to control the amount of fluoride drawn into conduit 36 and sprayed onto threads 14 within chamber 28. Flexible seals 39 are preferably provided about the openings 41 in the sides of chamber 28, through which the threads pass to restrict the amount of airborne fluoride passing through openings 41 into the atmosphere.

The individual threads 14 with the fluoride powder deposited thereon are then drawn by the ball warper 18 from the spray station 26 to a drying station 40 which, for example, could comprise a tunnel 42 having heat lamps 43 mounted therein, as seen in Figure 4. The fluoride impregnated threads 14 pass through tunnel 42 and are dried by the heat from lamps 43. As the threads dry, the cotton fibers shrink as the pores therein close, securing the fluoride particles to the threads. The dried impregnated threads are then gathered by the ball warper 18 as in a conventional rope forming process, and twisted with other groups of concurrently impregnated and gathered threads so as to form three separate impregnated cotton skeins 13. The skeins are then twisted together in a conventional rope forming pattern so as to define a length of the thoroughly impregnated cotton rope 12. The rope 12 is then cut to a desired length and formed into the desired toy configuration.

As the formation of rope 12 following the impregnation of the individual cotton threads is no different from that employed in a standard rope forming process only the initial portion of the rope forming process wherein the threads are impregnated with fluoride is illustrated in Figure 2 and described in detail. It is also to be understood that Figure 2 illustrates the initial portion of only one of a plurality of substantially identical forming lines used in the formation of each of skeins 13. As with conventional rope, the large number of individual threads which comprise each skein require the threads to be gathered in groups from a plurality of sets of spools by a corresponding plurality of ball warpers before being twisted together to form a skein. As each of the forming lines is virtually identical, only the initial portion of one of such lines is shown in Figure 2.

In an embodiment of the present invention, the powdered fluoride is adhered to the threads 14 by ionic bonding. While not specifically illustrated, this process is described with reference to Figure 2. In such a process, the following guides 20 and collecting guide 22 are constructed of a suitable plastic or metal material such that when the individual cotton threads pass therethrough at a relatively rapid rate of about ten to twelve feet per second, an electrostatic charge is imparted to the threads. In such a process, care should be taken to avoid grounding the threads and dissipating the charge. The charged threads are then drawn directly from the collecting guide 22 to the spray station 26. A misting station is not employed. The chamber 28 in spray station 26 is ionized to impart a negative charge to the airborne powdered fluoride therein. The charged fluoride particles are blown about the interior of chamber 28 by blower 34 so that they contact the threads 14 being drawn through the chamber by the ball warper as in the prior process. The charged particles within chamber 28 are attracted to and ionically bond with the statically charged threads. The remainder of the process is identical to that previously described, except that the elimination of the misting station obviates the need for a drying station.

The fluoride which is applied to the threads 14 could be either calcium or sodium fluoride. However, since only sodium fluoride has received FDA approval for use as a dental agent, sodium fluoride is presently preferred. The preferred concentration of the fluoride powder on the cotton threads is about two percent by weight.

A method of applying fluoride to the cotton threads to provide a chew toy embodying one aspect of the present invention, employs encapsulating the fluoride in porous polymeric beads, the formation of which is disclosed in U.S. Patent No. 4,690,825. These beads are marketed under the name MICROSPONGES by Advanced Polymer Systems, Inc. and can be applied to the cotton threads 14 utilizing the process illustrated in Figure 1 for depositing powdered fluoride onto the threads. The encapsulated fluoride particles simply replace the fluoride powder and are deposited on the moistened threads within spray chamber 28 by means of blower 34 in the same manner described above with respect to the powdered fluoride. Alternatively, the beads can be given a strong negative ionic charge so that they will strongly adhere to statically charged cotton thread. By either method of application, the beads are distributed along and adhere to the threads such that upon the threads being formed into skeins by the ball warper and the skeins twisted into rope, the encapsulated fluoride particles are uniformly dispersed through the rope. The porous polymer beads will retain the fluoride therein and later release the fluoride under the friction exerted thereon by the dog's teeth. The use of these polymeric beads to encapsulate the fluoride will extend the useful life of the fluoride contained in rope 12 and help prevent the inadvertent mechanical separation or "falling-off" of the fluoride from the cotton rope.

In addition to fluoride, each of the aforesaid processes can be used to apply other therapeutic agents to the threads such as chlorohexadine to prevent tartar and plaque from forming on the teeth and to prevent bacteria growth. Yucca extract could also be used to inhibit bacteria growth and halitosis. Attractive flavorings such as anise could also be employed to promote frequent chewing of the chew toy 10. These agents, like fluoride, should be applied to the cotton threads prior to the threads being twisted into skeins and can be applied to the threads either with the fluoride or in lieu thereof using the same methods described above for the application of fluoride to the threads.

With respect to each of the embodiments of the present invention discussed above, the therapeutic agent or agents need not be applied to all of the threads compressing chew toy 10. If desired, the agent or agents could be applied only to a sufficient number of threads such that when the impregnated and non-impregnated threads are twisted together into the desired chew toy configuration, the therapeutic agent as agents would be distributed relatively evenly throughout the formed toy. In such cases, different threads could be impregnated with different therapeutic agents and color coded if desired, and formed into different chew toys having different therapeutic properties, identified by the color coding of the impregnated threads.

As noted above, the chew toy 10 could also be configured as a rope tug used by pet owners for playful tugging with their dogs. Such a configuration would provide a more limited and controlled exposure of the dog to the fluoride and/or other agents impregnated in the rope and thereby increase the useful life of the agents within the toy.

As noted above, the chew toy 10 could also be configured as a rope tug used by pet owners for playful tugging with their dogs. Such a configuration would provide a more limited and controlled exposure of the dog to the fluoride and/or other agents impregnated in the rope and thereby increase the useful life of the agents within the toy.

## Claims

1. A chew toy (10) for dogs comprising a length of rope (12) formed from a plurality of soft pliable threads (14), the threads being impregnated with a therapeutic agent (16) so as to dispose said agent (16) through said rope (12) whereby upon being chewed by a dog a substantial portion of said agent (16) is retained within said rope and a lesser portion of said agent is released onto the teeth of the dog, characterised in that said agent is encapsulated in porous polymeric beads and said beads are ionically bonded to said threads, and in that said therapeutic agent is a therapeutic dental agent.

2. A chew toy as claimed in claim 1, wherein said agent (16) is at least partially retained within pores of the fibres in the said threads.

3. A chew toy as claimed in claim 1, wherein the soft pliable threads are of cotton.

4. A chew toy as claimed in claim 1, wherein said therapeutic dental agent (16) comprises fluoride.

5. A process for forming a chew toy having a therapeutic agent (16) impregnated therein, said process comprising the steps of:
impregnating a plurality of threads (14) with a therapeutic agent (16);
forming said threads into a length of rope (12); and
forming said rope into a desired chew toy configuration (10); characterised in that said agent is a therapeutic dental agent, and in that during the impregnating step, a static charge is imparted to the threads (14), and particles of the agent (16) are applied to the threads (14) such that those particles are ionically bonded to the threads.

6. A process as claimed in claim 5, wherein the step of impregnating the threads (14) comprises wetting the threads and applying the particles of agent to the threads.

7. A process as claimed in claim 6, wherein said particles are applied to said threads by passing said threads through an air flow containing said particles.

8. A process as claimed in claim 5, wherein the impregnating step comprises applying an aqueous solution containing the said agent to the threads, and then drying the said threads.

9. A process as claimed in claim 8, wherein the aqueous solution is applied by means of spraying.

10. A process as claimed in claim 8, wherein the aqueous solution is applied by passing the threads through a bath of the solution.

11. A process as claimed in any one of claims 6 to 10, wherein the said threads are dried before being formed into the length of rope.

12. A process as claimed in claim 5, wherein the threads are passed through an air flow containing particles of the agent during such application.

13. A process as claimed in claim 5 or 12, wherein the said particles of agent are given a positive electrical charge such that the said particles are ionically attracted to the threads.

14. A process as claimed in any one of claims 5 to 13, wherein the said forming step comprises twisting said threads to form a plurality of impregnated skeins and twisting said skeins to form a length of impregnated rope.

15. A process as claimed in claim 5, wherein the said therapeutic dental agent comprises fluoride.

16. A process as claimed in any one of claims 8, 9 or 10, when appended to claim 5, the said aqueous solution comprising approximately 6% by weight of fluoride and about 0.5% by weight of polyvinyl alcohol.

17. A process as claimed in one of claims 5 to 16, wherein said therapeutic agent includes at least one agent.

18. A process as claimed in claim 17, wherein one of the therapeutic agents includes chlorohexadine.

19. A process as claimed in any one of claims 5 to 7 and 11 to 18, wherein the said agent is encapsulated in porous polymer beads prior to application to said threads.

20. A process as claimed in any one of claims 5 to 14, wherein the said therapeutic agent comprises a breath freshening agent.

21. A process as claimed in any one of claims 5 to 14, wherein the said therapeutic agent includes a flavouring agent.

22. A process as claimed in one of claims 5 to 21, wherein the said threads are absorbent.

23. A process as claimed in any one of claims 5 to 22, wherein the threads are of cotton.

## Patentansprüche

1. Kauspielzeug (10) für Hunde, umfassend ein Stück Band (12) das aus einer Vielzahl von weichen, faltbaren Fäden (14) gebildet ist, wobei die Fäden mit einem therapeutischen Mittel (16) imprägniert sind, so daß das Mittel (16) sich in dem Band (12) befindet, wobei beim Kauen durch einen Hund ein wesentlicher Teil des Mittels (16) innerhalb des Bandes zurückgehalten wird und ein geringerer Teil des Mittels auf die Zähne des Hundes freigesetzt wird,
gekennzeichnet dadurch, daß das Mittel in porösen, polymerischen Bläschen eingeschlossen ist, und die Bläschen ionisch an die Fäden gebunden sind, und dadurch, daß das therapeutische Mittel ein therapeutisches Zahnmittel ist.

2. Kauspielzeug nach Anspruch 1, wobei das Mittel (16) mindestens teilweise in den Poren der Fasern in den Fäden zurückgehalten wird.

3. Kauspielzeug nach Anspruch 1, wobei die weichen, faltbaren Fäden aus Baumwolle sind.

4. Kauspielzeug nach Anspruch 1, wobei das therapeutische Zahnmittel (16) Fluorid umfaßt.

5. Verfahren zum Bilden eines Kauspielzeugs, das ein therapeutisches Mittel (16) darin imprägniert hat, wobei das Verfahren die Schritte umfaßt:
Imprägnieren einer Vielzahl von Fäden (14) mit einem therapeutischen Mittel (16);
Bilden der Fäden in ein Stück Band (12); und
Formen des Bandes in eine gewünschte Kauspielzeugkonfiguration (10), gekennzeichnet dadurch, daß das Mittel ein therapeutisches Zahnmittel ist, und dadurch, daß während des Imprägnierschritts eine statische Ladung auf die Fäden (14) gebracht wird, und Partikel des Mittels (16) auf die Fäden (14) aufgebracht werden, so daß die Partikel ionisch an die Fäden gebunden werden.

6. Verfahren nach Anspruch 5, wobei der Schritt des Imprägnierens der Fäden (14) das Benässen der Fäden umfaßt und das Aufbringen der Partikel des Mittels auf die Fäden.

7. Verfahren nach Anspruch 6, wobei die Partikel auf die Fäden aufgebracht werden, indem die Fäden durch eine Luftströmung geführt werden, die die Partikel enthält.

8. Verfahren nach Anspruch 5, wobei der Imprägnierschritt das Aufbringen einer wasserhaltigen Lösung auf die Fäden umfaßt, die das Mittel enthält, und dann das Trocknen der Fäden.

9. Verfahren nach Anspruch 8, wobei die wasserhaltige Lösung durch Sprühen aufgebracht wird.

10. Verfahren nach Anspruch 8, wobei die wasserhaltige Lösung aufgebracht wird, indem die Fäden durch ein Bad der Lösung geführt werden.

11. Verfahren nach einem der Ansprüche 6 bis 10, wobei die Fäden getrocknet werden, bevor sie in ein Stück Band geformt werden.

12. Verfahren nach Anspruch 5, wobei die Fäden durch eine Luftströmung geführt werden, die Partikel des Mittels enthält, während solcher Aufbringung.

13. Verfahren nach Anspruch 5 oder 12, wobei den Partikeln des Mittels eine positive, elektrische Ladung gegeben wird, so daß die Partikel ionisch an die Fäden angezogen werden.

14. Verfahren nach einem der Ansprüche 5 bis 13, wobei der Formschritt das Verwinden der Fäden umfaßt, so daß eine Vielzahl von imprägnierten Strähnen gebildet wird, und das Verwinden der Strähnen, so daß ein Stück von imprägniertem Band gebildet wird.

15. Verfahren nach Anspruch 5, wobei das therapeutische Zahnmittel Fluorid umfaßt.

16. Verfahren nach einem der Ansprüche 8, 9 oder 10, wenn abhängig von Anspruch 5, wobei die wasserhaltige Lösung etwa 6 Gew-% Fluorid und etwa 0,5 Gew-% Polyvinylalkohol umfaßt.

17. Verfahren nach einem der Ansprüche 5 bis 16, wobei das therapeutische Mittel mindestens ein Mittel umfaßt.

18. Verfahren nach Anspruch 17, wobei eines der therapeutischen Mittel Chlorohexadin umfaßt.

19. Verfahren nach einem der Ansprüche 5 bis 7 und 11 bis 18, wobei das Mittel in poröse polymerische Bläschen eingeschlossen wird, bevor es auf die Fäden aufgebracht wird.

20. Verfahren nach einem der Ansprüche 5 bis 14, wobei das therapeutische Mittel ein Atemerfrischungsmittel umfaßt.

21. Verfahren nach einem der Ansprüche 5 bis 14, wobei das therapeutische Mittel ein Geschmacksmittel umfaßt.

22. Verfahren nach einem der Ansprüche 5 bis 21, wobei die Fäden absorbierend sind.

23. Verfahren nach einem der Ansprüche 5 bis 22, wobei die Fäden aus Baumwolle sind.

## Revendications

1. Jouet à mâchonner (10) pour chiens comprenant une longueur de corde (12) constituée de plusieurs fils souples pliables (14), les fils étant imprégnés d'un agent thérapeutique (16) de façon à disposer ledit agent (16) dans la corde (12), d'où il résulte que, par suite d'un mâchonnage par un chien, une partie notable dudit agent (16) reste dans la corde et une moindre partie dudit agent est libérée sur les dents du chien, caractérisé en ce que ledit agent est encapsulé dans des billes de polymère poreux et lesdites billes sont liées ioniquement aux fils, et en ce que l'agent thérapeutique est un agent thérapeutique dentaire.

2. Jouet à mâchonner selon la revendication 1, dans lequel ledit agent (16) est au moins partiellement maintenu dans les pores des fibres dans les fils.

3. Jouet à mâchonner selon la revendication 1, dans lequel les fils doux pliables sont en coton.

4. Jouet à mâchonner selon la revendication 1, dans lequel l'agent dentaire thérapeutique (16) comprend du fluor.

5. Procédé pour former un jouet à mâchonner dans lequel est imprégné un agent thérapeutique (16), ce procédé comprenant les étapes suivantes :
imprégner plusieurs fils (14) d'un agent thérapeutique (16) ;
conformer les fils en une certaine longueur de corde (12) ; et
conformer ladite corde en une configuration de jouet à mâchonner désirée (10) ;
caractérisé en ce que ledit agent est un agent thérapeutique dentaire et en ce que, pendant l'étape d'imprégnation, une charge statique est impartie aux fils (14) et les particules de l'agent (16) sont appliquées aux fils (14) de sorte que ces particules sont liées ioniquement aux fils.

6. Procédé selon la revendication 5, dans lequel l'étape d'imprégnation des fils (14) comprend un mouillage des fils et l'application des particules d'agent aux fils.

7. Procédé selon la revendication 6, dans lequel les particules sont appliquées aux fils en faisant passer les fils dans un flux d'air contenant lesdites particules.

8. Procédé selon la revendication 5, dans lequel l'étape d'imprégnation comprend l'application d'une solution aqueuse contenant ledit agent aux fils puis le séchage des fils.

9. Procédé selon la revendication 8, dans lequel la solution aqueuse est appliquée par pulvérisation.

10. Procédé selon la revendication 8, dans lequel la solution aqueuse est appliquée en faisant passer les fils dans un bain de la solution.

11. Procédé selon l'une quelconque des revendications 6 à 10, dans lequel les fils sont séchés avant d'être conformés selon la longueur de la corde.

12. Procédé selon la revendication 5, dans lequel les fils sont amenés à passer à travers un flux d'air contenant des particules de l'agent pendant leur application.

13. Procédé selon la revendication 5 ou 12, dans lequel on applique aux particules d'agent une charge électrique positive de sorte que les particules sont attirées ioniquement vers les fils.

14. Procédé selon l'une quelconque des revendications 5 à 13, dans lequel l'étape de conformation comprend une torsion des fils pour former une pluralité d'écheveaux imprégnés et une torsion des écheveaux pour former une longueur de corde imprégnée.

15. Procédé selon la revendication 5, dans lequel l'agent thérapeutique dentaire comprend du fluor.

16. Procédé selon l'une quelconque des revendications 8, 9 ou 10, prises dans leur rattachement à la revendication 5, dans lequel la solution aqueuse comprend environ 6% en poids de fluorure et environ 0,5% en poids d'alcool de polyvinyle.

17. Procédé selon l'une quelconque des revendications 5 à 16, dans lequel l'agent thérapeutique comprend au moins un agent.

18. Procédé selon la revendication 17, dans lequel l'un des agents thérapeutiques comprend du chlorohexadine.

19. Procédé selon l'une quelconque des revendications 5 à 7 et 11 à 18, dans lequel l'agent est encapsulé dans des billes de polymère poreux avant d'être appliqué aux fils.

20. Procédé selon l'une quelconque des revendications 5 à 14, dans lequel l'agent thérapeutique comprend un agent de rafraîchissement d'haleine.

21. Procédé selon l'une quelconque des revendications 5 à 14, dans lequel l'agent thérapeutique comprend un agent de saveur.

22. Procédé selon l'une quelconque des revendications 5 à 21, dans lequel les fils sont absorbants.

23. Procédé selon l'une quelconque des revendications 5 à 22, dans lequel les fils sont en coton.
